# EUROPÄISCHE PATENTSCHRIFT

(11) **EP 0 889 774 B1**
(45) Veröffentlichungstag und Bekanntmachung des Hinweises auf die Patenterteilung: **09.01.2002**
(21) Anmeldenummer: 97915413.5
(22) Anmeldetag: 21.03.1997
(51) Int. Cl.: B29C 33/12, B29C 45/14, G01D 11/24

(54) **KUNSTSTOFFSENSOR UND VERFAHREN ZU DESSEN HERSTELLUNG**
PLASTIC RESISTOR AND PROCESS FOR PRODUCING IT
CAPTEUR EN PLASTIQUE ET SON PROCEDE DE FABRICATION

(30) Priorität: 29.03.1996 DE 19612765
(43) Veröffentlichungstag der Anmeldung: 13.01.1999
(73) Patentinhaber: Continental Teves AG & Co. oHG, 60488 Frankfurt (DE)
(72) Erfinder: DE VOLDER, Edmond, B-9100 Sint-Niklaas (BE); GOOSSENS, André, B-2840 Rumst (BE); PANIS, Marc, B-2820 Bonheiden (BE); VOLZ, Peter, D-64291 Darmstadt (DE)
(74) Vertreter: Blum, Klaus-Dieter, Dipl.-Ing.
(86) Internationale Anmeldenummer: EP9701456
(87) Internationale Veröffentlichungsnummer: WO9736729

(56) Entgegenhaltungen:
- EP-A- 0 357 777
- EP-A- 0 642 026
- DE-A- 3 930 702
- GB-A- 2 007 581

## Beschreibung

Die vorliegende Erfindung betrifft aktive oder passive Sensoren zur Erfassung von Ortsverschiebungen, Bewegungsgeschwindigkeiten und Drehzahlen eines Encoders gemäß dem Oberbegriff von Anspruch 1 und ein Verfahren zur Herstellung dieser Sensoren.

Im Bereich der Automobilindustrie, insbesondere bei der Regelung von Bremsen mittels eines Anti-Blockiersystems, sind derartige Vorichtungen zur Erfassung von Raddrehzahlen allgemein bekannt. Sie bestehen in der Regel jeweils aus einem Encoder, der mechanisch mit einem sich drehenden Rad verbunden ist, und einem Sensor, der diesen Encoder berührungslos abtastet.

Aus der deutschen Offenlegungsschrift DE-OS 34 00 870 ist ein Kunststoffsensor bekannt, bei dem ein erster Gehäuseteil ein zur Aufnahme eines Polkerns, einer Spule sowie von zwei Stromschienen bestimmter Spulenträger ist. Nach der Komplettierung des ersten Gehäuseteils mit den erwärmten elektrischen Bauteilen wird dieser in einem Spritzgießvorgang mit Kunststoff zur Bildung eines zweiten Gehäuseteils teilweise umspritzt, in welchem auch das Ende einer Leitung eingebettet ist. Der im wesentlichen von beiden Gehäuseteilen gebildete Sensor hat noch eine Öffnung, die nach dem Anschluß der Leitung an die Stromschienen durch Einsetzen eines Deckels verschlossen wird. Ein derartiger Sensor ist hohen Belastungen, insbesondere durch Feuchtigkeit, Schmutz, Wärme und Erschütterungen ausgesetzt. Der durch das Umspritzen des ersten Gehäuseteils erzielte Formschluß mit dem zweiten Gehäuseteil sowie das Einfügen des Deckels schützen diesen Sensor jedoch nicht sicher vor dem Eindringen von Feuchtigkeit, was zu Störungen oder zu Ausfall des Sensors führen kann. Deshalb sind beide Gehäuseteile in ihrer Kontaktzone sowie der Deckel mit dem zweiten Gehäuseteil zusätzlich durch Ultraschweißen stoffschlüssig verbunden. Diese Maßnahme verteuert diesen Sensor, weil sie zusätzliche Verfahrensschritte und einen erheblichen apparativen Aufwand bedingt.

Aus diesem Grunde ist ein in der DE-OS 39 30 702 offenbarter Sensor entwickelt worden, bei dem die Dichtheit des Gehäuses bereits mit dem Erzeugen des zweiten Gehäuseteils erzielt wird, wobei ein separates Schmelzelement beim Umspritzen des ersten Gehäuseteils durch den schmelzflüssigen Kunststoff eine Erwärmung über seinen Schmelzpunkt hinaus erfährt, was zu einer stoffschlüssigen Verbindung beider Gehäuseteile führt. Das als Folie, Faden oder Band ausgeführte Schmelzelement ist dabei jedoch nicht Bestandteil der Gehäuses und erfordert deshalb bei der Herstellung des Sensors einen zusätzlichen Montageschritt.

Am unteren Ende ist ferner der erste Gehäuseteil durch einen Polstift unterbrochen, der unter anderem beim Spritzen des zweiten Gehäuseteiles zur Fixierung des ersten Gehäuseteiles in der Umspritzform genutzt wird. Dadurch kann der Polstift nicht vollständig vom Spritzkunststoff ummantelt werden, wodurch wiederum mögliche Leckpfade für den Eintritt von Feuchtigkeit zwischen dem Polstift und dem ersten Gehäuseteil entstehen können. Desweiteren ist hier außer der Fixierung des ersten Gehäuseteils durch den Polstift bzw. -schuh keine weitere Positioniermöglichkeit des ersten Gehäuseteils in der Umspritzform vorgesehen. Durch die beim Umspritzvorgang auftretenden hohen Schmelzdrücke kann es deshalb beim Spritzen des zweiten Gehäuseteils zu einem Verschwimmen des ersten Gehäuseteils und der damit verbundenen elektrischen Bauteile in der Form kommen.

Aus der EP 0 357 777 A1 sind ein Verfahren und eine Vorrichtung bekannt, bei dem ein hitzebeständiges Bauteil mittels Vorsprüngen und Abstandshaltern in einer Spritzform positioniert wird. Diese Positioniermittel sind integraler Bestandteil des zu umspritzenden Bauteils und somit ebenfalls hitzebeständig. Aus diesem Grunde wird keine dichtende Verbindung und insbesondere keine stoffschlüssige Verbindung zwischen dem Bauteil und der Umspritzmasse geschaffen, wodurch Leckagewege für den Eintritt von Feuchtigkeit und Verunreinigungen in das Bauteil entstehen.

Es ist deshalb die Aufgabe der vorliegenden Erfindung, einen aktiven oder passiven Kunststoffsensor vorzusehen, der bei seiner Herstellung eine genaue und solide Positionierung der elektrischen Bauteile in der Umspritzform ermöglicht, der den Eintritt von Feuchtigkeit wirksam verhindert und der gleichzeitig einfach und kostengünstig gefertigt werden kann.

Diese Aufgabe wird durch die kennzeichnenden Merkmale von Anspruch 1 gelöst. Erfindungsgemäß ist dazu zumindest ein mit dem ersten Gehäuseteil einstückig verbundenes Positionierelement vorgesehen, über das der erste Gehäuseteil während der Herstellung des zweiten Gehäuseteils in der Spritzform fixiert und so ein Verschwimmen der elektrischen Bauteile vermieden wird. Um den Eintritt von Feuchtigkeit zwischen den vorzugsweise mehreren Positionierelementen und dem zweiten Gehäuseteil wirksam zu verhindern, findet während des Spritzvorganges des zweiten Gehäuseteiles eine stoffschlüssige Verbindung des zweiten Gehäuseteiles mit den Positionierelementen statt.

Die stoffschlüssige Verbindung wird dabei durch zumindest ein, vorzugsweise aber mehrere Schmelzelemente erleichtert, die mit den Positionierelementen integriert ausgebildet sind. Zur Verhinderung des Eindringens von Feuchtigkeit an anderer Stelle des ersten Gehäuseteils, beispielsweise bei einem passiven Sensor am unteren Ende beim Eintritt der Polschuhe, können die Schmelzrippen auch direkt am ersten Gehäuseteil ausgebildet sein.

In der bevorzugten Ausführungsform der vorliegenden Erfindung gestaltet sich der Schmelzvorgang besonders einfach, wenn die Schmelzelemente als dünne Rippen ausgebildet sind, die beim Spritzen des zweiten Gehäuseteils teilweise verflüssigt werden.

Dabei ist es vorteilhaft, wenn die Schmelzelemente aus einem thermoplastischen Material bestehen, das einen Schmelzpunkt aufweist, der kleiner oder höchstens gleich dem Schmelzpunkt des Materials des zweiten Gehäuseteils ist. Bei zu geringer Schmelztemperatur der Rippen würden diese vollständig aufgeschmolzen ünd könnten nicht mehr eine stoffschlüssige Verbingung mit dem zweiten Gehäuseteil eingehen. Wäre die Schmelztemperatur der Rippen verglichen mit derjenigen des zweiten Gehäuseteils viel höher, so würden sie nicht anschmelzen.

Insbesondere bei aktiven Sensoren können durch deren, verglichen mit passiven Sensoren, geringen Baugröße häufig nicht alle elektrischen Bauteile in einen ersten Gehäuseteil angeordnet werden. Beim Spritzvorgang zur Herstellung des zweiten Gehäuseteils ist es deshalb besonders vorteilhaft, wenn diese Bauteile mit vorzugsweise mehreren zusätzlichen Positionierelementen in der Form fixiert werden können. Diese zusätzlichen Positionierelemente gehen dann wieder eine stoffschlüssige Verbindung mit dem zweiten Gehäuseteil ein. Dies geschieht insbesondere wieder über die an diesen Elementen befindlichen Schmelzrippen.

Gemäß einer Ausführungsform der vorliegenden Erfindung ist zumindest ein Abschnitt eines Positionierelementes als Bohrung ausgebildet. Die Bohrung dient in vorteilhafter Weise zur Aufnahme von Stiften oder stiftähnlichen Körpern, mittels derer der erste Gehäuseteil in einer Umspritzform fixiert werden kann. Dies hat den Vorteil, daß die Positionierelemente keine zur Fixierung des ersten Gehäuseteils erforderlichen, über das Sensorgehäuse vorstehenden Abschnitte aufweisen müssen. Dadurch kann vorteilhaft eine eventuell notwendige Entfernung dieser Abschnitte bei der Herstellung des erfindungsgemäßen Sensors eingespart werden.

Die Positionierelemente erstrecken sich vorzugsweise in radialer Richtung von der Mittelachse des Sensors nach außen in Richtung der Umspritzform. Durch eine direkte formschlüssige Verbindung der Positionierelemente mit der Form wird ein Verdrehen bzw. Veschwimmen des ersten Gehäuseteils mit den darin befindlichen elektrischen Bauteilen wirksam verhindert.

Die Schmelzrippen sind insbesondere radial umlaufend um die Achse der Positionierelemente angeordnet, um den hier möglichen Leckweg zwischen den Positionierelementen und dem zweiten Gehäuseteil zu verschließen.

Die Schmelzelemente können aber auch an einem anderen Ende des ersten Gehäuseteils angeordnet sein, an dem einzelne elektrische Bauteile aus dem ersten Gehäuseteil herausragen. Mittels der hier bezogen auf die die Mittelachse des Sensors radial umlaufenden Schmelzrippen werden wiederum möglicherweise vorhandene Leckwege gesperrt.

Zur direkten Fixierung des ersten Gehäuseteils in der Umspritzform ist es vorteilhaft, wenn die Positionierelemente zumindest geringfügig über die Außenkontur des Sensors hervorstehen. Diese hervorstehenden Abschnitte können auf einfache Art und Weise in die Form eingebettet werden.

Dabei sind die Positionierelemente in besonders vorteilhafter Weise so gestaltet, daß sie nach dem Spritzen des zweiten Gehäuseteils leicht abgetrennt, beispielsweise abgeschnitten werden können.

Die elektrisch leitende Verbindung zwischen den Kontakten der elektrischen Bauteile und den in ihrem weiteren Verlauf aus dem Sensor herausgeführten Kabelleitern kann erfindungsgemäß sowohl mittels einer stoffschlüssigen Verbindung, wie beispielsweise Löten oder Schweißen, als auch über eine kraftschlüssige, insbesondere eine mechanische Verbindung erfolgen. Denkbar sind hier auch vorteilhafte Kombinationen dieser beiden Verbindungsarten. Insbesondere erfolgt die elektrisch leitende Verbindung der Bauteile erfindungsgemäß über Crimpverbindungen, so daß eventuell auftretende Kabelzugkräfte von den Crimphülsen und nicht von den Kontakten aufgenommen werden. Die Crimpverbindungen können sowohl im ersten als auch im zweiten Gehäuseteil angeordnet sein.

Die Crimpverbindungen können einerseits im ersten Gehäuseteil verankert werden. Bei dieser auch "Pre-mold I" genannten Erfindungsvariante können die beim Spritzen des zweiten Gehäuseteils auf die Kabelleiter wirkenden Kräfte von den Crimphülsen und damit vom ersten Gehäuseteil aufgenommen werden.

Andererseits ist es bei einer "Pre-mold II" genannten Variante der vorliegenden Erfindung auch möglich, daß die Crimpverbindungen im zweiten Gehäuseteil angeordnet sind. Die Crimpverbindung kann dann nach dem Spritzen des ersten Gehäuseteils einfacher hergestellt werden, weil die elektronischen Bauteile zusammen mit den ersten Gehäuseteil handhabbar sind.

Gemäß einer weiteren Ausführungsform der vorliegenden Erfindung weisen die elektrischen Bauteile zumindest teilweise radial nach außen vorspringende Abschnitte auf. Mittels dieser vorzugsweise in Form von Ohren ausgebildeten Abschnitte eines Trägerblechs dieser Bauteile können die elektrischen Bauteile und insbesondere das Trägerblech eines als Chip ausgebildeten Sensorelementes während des Umspritzvorganges im ersten Gehäuseteil und/oder der Umspritzform fixiert werden. Insbesondere bei der Fixierung der elektrischen Bauteile im ersten Gehäuseteil ist es besonders vorteilhaft, wenn der erste Gehäuseteil nutenartige Öffnungen aufweist, in die die vorspringenden Abschnitte eingelegt oder -gesteckt werden können. Dadurch wird ein Verschwimmen dieser Bauteile während der Spritzung des zweiten Gehäuseteils wirksam verhindert und eine genaue Positionierung der elektrischen Bauteile im ersten Gehäuseteil ermöglicht. Hierdurch kann insbesondere die Lage des Lesepunktes des Sensorelementes im Sensor exakt bestimmt werden.

Das erfindungsgemäße Verfahren zur Herstellung derartiger Sensoren gestaltet sich besonders einfach und kostengünstig. Zuerst werden die betreffenden elektrischen Bauteile mit dem ersten Gehäuseteil umspritzt bzw. durch Einlegen oder -stekken darin fixiert. Anschließend erfolgt die Fixierung des ersten Gehäuseteils mit den darin befindlichen elektrischen Bauteilen in einer Umspritzform über die Positionierelemente. Danach wird der erste Gehäuseteil mit dem zweiten Gehäuseteil umspritzt. Die Materialien der Positionierelemente und des zweiten Gehäuseteils sind vorzugsweise ähnlich, weisen aber zumindest einen annähernd gleichen Schmelzpunkt auf, so daß während des Spritzens des zweiten Gehäuseteils erfindungsgemäß eine stoffschlüssige Verbindung zwischen diesen Teilen hergestellt wird.

Insbesondere bei aktiven Sensoren, die eine sehr geringe Baugröße aufweisen, können beim zweiten Verfahrensschritt außerhalb des ersten Gehäuseteils befindliche elektrische Bauteile über zusätzliche Positionierelemente ebenfalls in der Form fixiert werden, so daß kein Verschwimmen derselben während des nachfolgenden Umspritzvorganges stattfindet.

In einem an das Hauptverfahren anschließenden Verfahrensschritt können eventuell vorhandene, über die Außenkontur des Sensors hinausragende Abschnitte der Positionierelemente abgetrennt werden. Dadurch sind unterschiedlichste Formen der Positionierelemente an verschiedenen Stellen des ersten Gehäuseteils möglich, die jedoch nicht die Größe und Endform des jeweiligen Sensors beeinträchtigen.

Die Kontakte der elektrischen Bauteile werden vorzugsweise vor dem Spritzen des zweiten Gehäuseteils mit den Kabelleitern in einem einzigen Schritt über Crimphülsen elektrisch leitend verbunden. Die Crimphülsen nehmen Kabelzugkräfte auf, so daß auch dadurch auf eine Tülle verzichtet werden kann.

In einer Ausführungsform erfolgt die Crimpverbindung bereits vor dem Spritzen des ersten Gehäuseteils. Auf diese Weise kann die Crimpverbindung im ersten Gehäuseteil angeordnet werden, so daß beim Spritzen des zweiten Gehäuseteils auf die Kabelleiter wirkende Kräfte über die Crimpverbindung vom ersten Gehäuseteil aufgenommen werden.

Alternativ dazu kann die Herstellung der Crimpverbindung auch erst nach dem Spritzen des ersten Gehäuseteils erfolgen. Die Crimpverbindung kann dann einfacher hergestellt werden, weil die elektronischen Bauteile zusammen mit den ersten Gehäuseteil leichter handhabbar sind.

Wie oben schon ausgeführt, erfolgt die Positionierung zumindest von Teilen der elektrischen Bauteile im ersten Gehäuseteil und/oder der Umspritzform vorzugsweise über an diesen befindlichen, radial vorspringenden Abschnitten. Die Positionierung der Bauteile kann mittels Umspritzen der elektronischen Bauteile mit dem ersten Gehäuseteil oder durch Einstecken der vorspringenden Abschnitte oder Ohren in Nuten des ersten Gehäuseteils erfolgen. Dadurch wird deren Verschwimmen während des Umspritzvorganges wirksam verhindert und die Position diese Bauteile im ersten Gehäuseteil und somit im Sensor exakt vorherbestimmt.

Eine nähere Beschreibung der vorliegenden Erfindung erfolgt im folgenden im Zusammenhang mit den beigefügten Zeichnungen, von denen zeigen
- Fig. 1: eine teilweise geschnittene Ansicht einen erfindungsgemäßen passiven Kunststoffsensors,
- Fig. 2: eine erste Ausführungsform eines aktiven Kunststoffsensors in teilweise geschnittener Darstellung,
- Fig. 3: einen Querschnitt der Ausführungsform gemäß Fig. 2 entlang der Linie I - I,
- Fig. 4: eine weitere Ausführungsform eines erfindungsgemäßen aktiven Sensors in teilweise geschnittener Ansicht,
- Fig.5a: eine geschnittene Seitenansicht der in Fig. 4 dargestellten Ausführungsform,
- Fig.5b: eine geschnittene Seitenansicht einer zu Fig. 5a alternativen Ausführungsform,
- Fig. 6: eine weitere Ausführungsform eines erfindungsgemäßen aktiven Sensors in geschnittener Seitenansicht, und
- Fig. 7: eine Schnittansicht der in Fig. 6 dargestellten Ausführungsform.

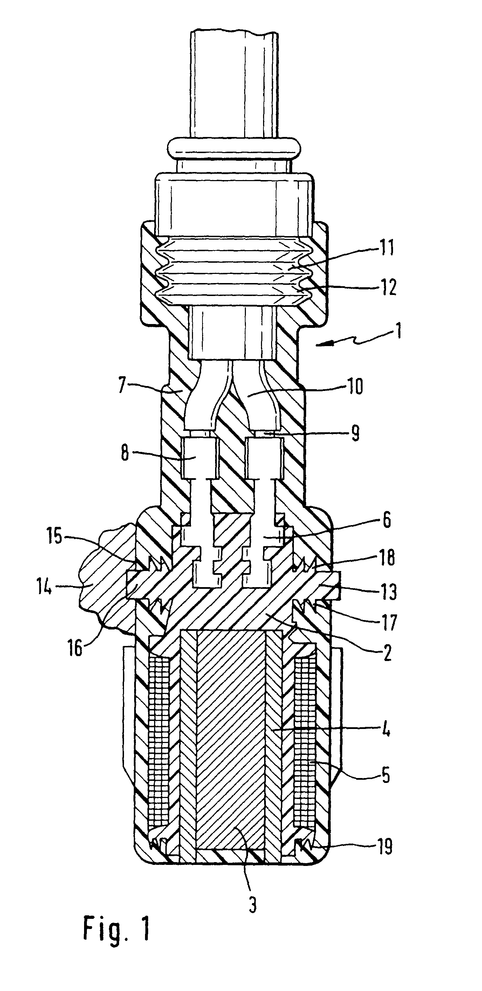

Fig. 1 stellt in teilweise geschnittener Ansicht einen erfindungsgemäßen nach dem Induktionsprinzip arbeitenden passiven Sensor 1 dar. Der Sensor 1 umfaßt im wesentlichen einen aus Kunststoff hergestellten ersten Gehäuseteil bzw. Spulenkörper 2, in dem als elektrische Bauteile ein Permanentmagnet 3, zwei Polschuhe 4, eine Spule 5 und deren Kontakte 6 angeordnet sind, und einen zweiten, ebenfalls aus Kunststoff gespritzten Gehäuseteil 7. Die Kontakte 6 sind über Crimpverbindungen 8 mit elektrischen Leitern 9 verbunden, die eine Isolation 10 aufweisen und im weiteren Verlauf durch eine vom zweiten Gehäuseteil 7 umspritzte Tülle 11 aus dem Sensor 1 geleitet werden. Die Tülle 11, die formschlüssig mit dem zweiten Gehäuseteil 7 verbundene Rippen 12 aufweist, dient zum Abdichten und Positionieren des Kabels 9, 10 im zweiten Gehäuseteil 7.

Der erste Gehäuseteil 2 umfaßt vorzugsweise zwei einstückig damit ausgebildete erfindungsgemäße Positionierelemente bzw. Zapfen 13. Die Positionierelemente 13 erstrecken sich in dieser Ausführungsform in radialer Richtung bezogen auf die Mittelachse des Sensors 1 vom ersten Gehäuseteil 2 nach außen und dienen beim Spritzen des zweiten Gehäuseteils 7 zur Positionierung des ersten Gehäuseteils 2 und der darin befindlichen elektrischen Bauteile 3 - 6 in der Spritzform 14. Dazu stehen die Positionierelemente 13 zumindest geringfügig aus der Außenkontur 15 des Sensors 1 hervor. Diese hinausragenden Abschnitte 16 der Positionierelemente 13 werden form- bzw. kraftschlüssig in entsprechende Aussparungen der Form 14 eingelegt.

Gemäß einer nicht dargestellten, alternativen Ausführungsform der vorliegenden Erfindung ist es auch möglich, daß die Positionierelemente zumindest teilweise als Bohrung im ersten Gehäuseteil 2 ausgebildet sind. Über ebenfalls nicht gezeigte, in diese Bohrung einsteckbare Sifte oder stiftähnliche Körper erfolgt dann die Fixierung des ersten Gehäuseteils 2 in der Umspritzform 14. Die Positionierelemente 13 müssen dann nicht mehr radial vorspringend ausgebildet sein, wodurch in vorteilhafter Weise auf deren möglicherweise erforderliche Abtrennung verzichtet werden kann.

Zur Vermeidung von Feuchtigkeitseintritt zwischen den Positionierelementen 13 und dem zweiten Gehäuseteil 7 sind die Positionierelemente 13 erfindungsgemäß mit zumindest einem, vorzugsweise aber mehreren Schmelzelementen 17 versehen, die mit dem zweiten Gehäuseteil 7 während dessen Herstellung eine stoffschlüssige Verbindung eingehen. Die Schmelzelemente 17 sind dabei vorzugsweise als um die Mittelachse der Positionierelemente 13 umlaufende dünne Schmelzrippen 18 ausgebildet. Beim Spritzen des zweiten Gehäuseteils 7 schmelzen die Rippen 18 aufgrund der hier auftretenden Kontakttemperatur und dem Schmelzdruck von bis zu 400 bar teilweise an und gehen so die stoffschlüssige und somit feuchtigkeitsdichte Verbindung mit dem zweiten Gehäuseteil 7 ein. Als Werkstoff für den ersten Gehäuseteil 2 und damit auch der Schmelzrippen 18 wird vorzugsweise ein thermoplastischer Kunststoff verwendet, der eine kleinere bzw. eine nicht höhere Schmelztemperatur als der zweite Gehäuseteis 7 aufweist.

Mittels der Positionierelemente 13 ist es auch möglich, daß die hier anders dargestellten Polschuhe 4 völlig vom zweiten Gehäuseteil 7 umgeben sind, so daß auch an dieser Stelle keine Feuchtigkeit in den Sensor 1 eindringen kann. In der gezeigten Ausführungsform wird der Wassereintritt am unteren Ende des ersten Gehäuseteils 2 durch weitere Schmelzrippen 19 vermieden, die hier bezogen auf die Mittelachse des Sensors 1 radial umlaufend angeordnet sind und analog zu den oben beschriebenen Rippen 18 wiederum eine stoffschlüssige Verbindung mit dem zweiten Gehäuseteil 7 eingehen.

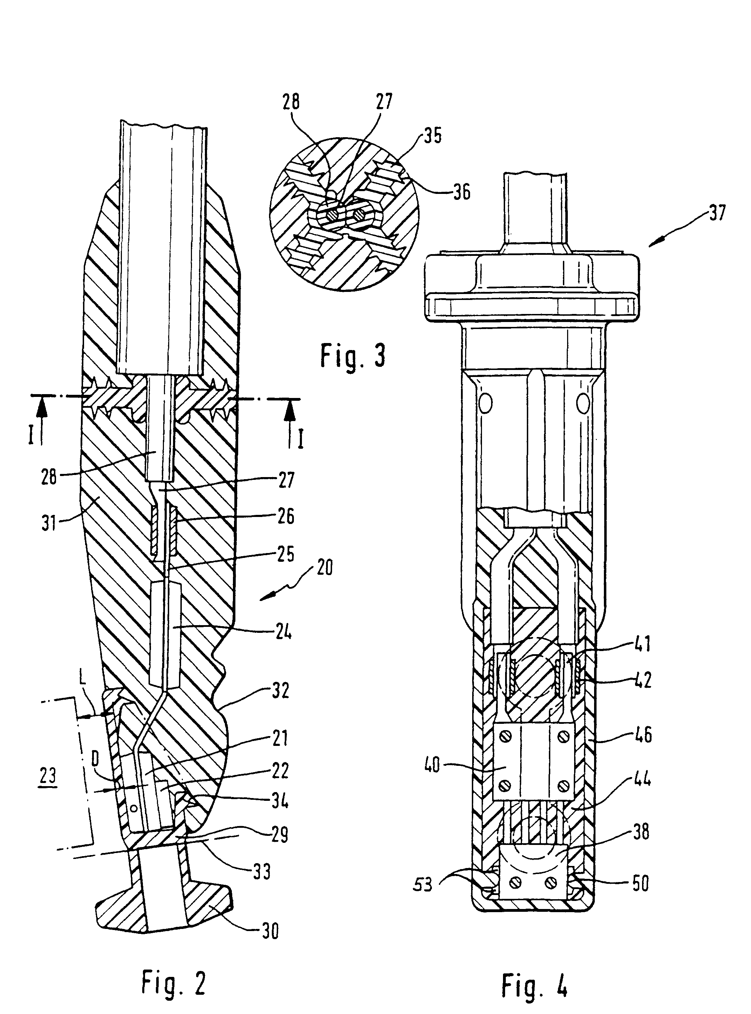

In der in Fig. 2 gezeigten Ausführungsform ist in teilweise geschnittener Darstellung ein erfindungsgemäßer aktiver Sensor 20 abgebildet. Bei derartigen Sensoren kann auf die Spule im Sensor verzichtet werden, so daß aktive Sensoren verglichen mit passiven Sensoren eine wesentlich geringere Baugröße aufweisen können. Der aktive Sensor 20 umfaßt vorzugsweise eine Kombination aus einem magnetostatisch bzw. magnetoresistiv empfindlichen Element 21 und einem Vorspannmagneten 22, der magnetisch an einen hier nur schematisch dargestellten Encoder 23 gekoppelt ist. Die vom Sensorelent 21, bei dem es sich beispielsweise um eine Hall-Sonde oder wie hier um eine magnetoresistive Widerstandsbrücke handeln kann, erzeugte Signalspannung wird von einer Schaltung ausgewertet, die vorzugsweise durch einen integrierten Schaltkreis realisiert und in einem IC-Gehäuse 24 untergebracht ist. Die Kontakte 25 des IC's 24 werden vorzugsweise über Crimpkontakte 26 mit elektrischen Leitern 27 verbunden, die jeweils von einer Isolierung 28 umgeben sind und aus dem Sensor 20 herausgeführt werden. Alternativ zur Crimpverbindung sind auch stoffschlüssige Verbindungen, wie beispielsweise Löten oder Schweißen, zur Herstellung der elektrischen Verbindung der Leiter 27 mit den Kontakten 26 möglich. Ebenfalls denkbar ist hier auch eine Kombination einer Crimpverbindung mit einer derartigen stoffschlüssigen Verbindung.

Das Sensorelement 21 und der Vorspannmagnet 22 sind in einem ersten Gehäuseteil 29 eingebettet, der gleichzeitig als Positionierelement dient. Das Positionierelement 29 weist an seinem unteren Ende einen Positionierabschnitt 30 auf, über den der erste Gehäuseteil 29 während des Spritzens des zweiten Gehäuseteils 31 in einer hier nicht dargestellten Umspritzform verdreh- und verschiebesicher fixiert wird. Der über die Außenkontur 32 des Sensors 20 hervorstehende Abschnitt 30 wird nach der Fertigstellung des Sensors 30 entlang der Linie 33 abgetrennt, beispielsweise abgeschnitten. Dadurch erhält man einen Sensor 20 mit einer sehr geringen Baugröße.

Das Positionierelement 29 weist analog zu oben wiederum als Schmelzrippen 34 ausgebildete Elemente auf, die mit dem zweiten Gehäuseteil 31 eine stoffschlüssige Verbindung eingehen und so, wie bereits oben beschrieben, das Eindringen von Feuchtigkeit zwischen dem ersten und dem zweiten Gehäuseteil 29, 31 verhindern.

Durch die spezielle Form des ersten Gehäuseteils 29 kann dessen Wanddicke D besonders gering gestaltet werden. Auf diese Weise wird erfindungsgemäß der nutzbare Luftspalt L zwischen dem Sensorelement 21 und dem Encoder 23 sehr groß gehalten. Dies ist ein besonders hervorzuhebender Vorteil, weil dadurch der Einbauraum des Sensors, beispielsweise im Radlager eines Automobils, klein gehalten werden kann.

Fig. 3 zeigt einen Querschnitt von Fig. 2 entlang der Schnittlinie I - I. Die außerhalb des ersten Gehäuseteils 29 befindlichen elektrischen Leiter 27 werden über ihre Isolierung 28 von zusätzlichen Positionierelementen 35 beim Spritzen des zweiten Gehäuseteils 31 in der Form gehalten. Dies ist besonders bei aktiven Sensoren von Vorteil, die eine geringe Baugröße aufweisen, so daß nicht alle elektrischen Bauteile im ersten Gehäuseteil 29 untergebracht werden können. Diese Teile können dann mittels zusätzlicher Positionierelemente in der Umspritzform fixiert werden. Die Positionierelemente 35 weisen erneut Schmelzelente 36 auf, deren Funktionweise und Zweck oben schon beschrieben worden ist.

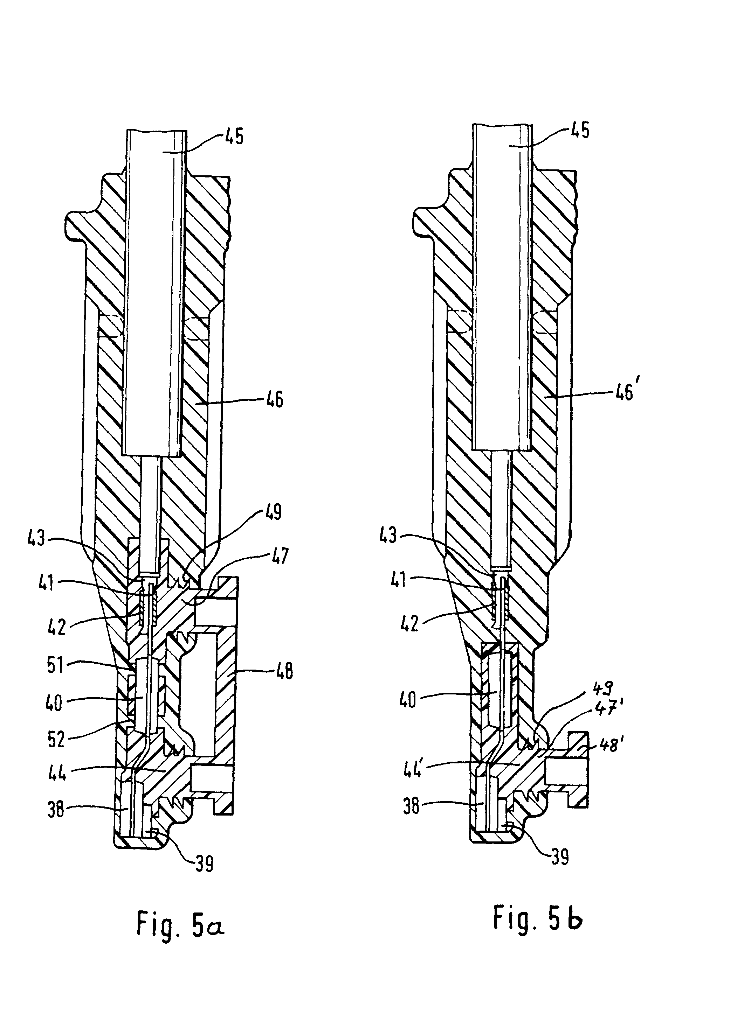

In den Fig. 4, 5a und 5b ist ein weiterer erfindungsgemäßer aktiver Sensor 37 teilweise im Schnitt in einer Drauf- und einer Seitenansicht dargestellt. Der Aufbau der elektrischen Bauteile und deren Funktionsweise mit dem Sensorelement 38, dem Vorspannmagneten 39 und dem IC-Gehäuse 40 ist bereits in Zusammenhang mit Fig. 2 beschrieben worden und soll hier nicht wiederholt werden.

Die Kontakte 41 des IC's 40 sind wieder vorzugsweise über Crimphülsen 42 mit den elektrischen Leitern 43 verbunden. Dabei erfolgt die Crimpverbindung dieser Teile in vorteilhafter Weise in einem einzigen Arbeitsgang. Jedoch sind analog zu den Ausführungen zu Fig. 2 wieder andere Verbindungsarten wie Löten oder Schweißen sowie Kombinationen derartiger Verbindungen mit Crimpen möglich. Die Crimpverbindung ist in der Ausführungsform nach Fig. 5a (Pre-mold I) im ersten Gehäuseteil 44 angeordnet, so daß eventuell auf das Kabel 45 wirkende Zugkräfte nicht von den Kontakten 41 sondern über die Crimphülsen 42 vom ersten Gehäuseteil 44 aufgenommen werden. Im Vergleich zu der in Fig. 2 dargestellten Ausführungsform ergibt sich hierdurch eine weitere Verbesserung, weil auf diese Art und Weise auch die beim Spritzen des zweiten Gehäuseteils 46 auf das Kabel 45 wirkenden Kräfte vom ersten Gehäuseteil 44 aufgenommen werden können. Alternativ dazu kann die Crimpverbindung gemäß Fig. 5b auch im zweiten Gehäuseteil 46' angeordnet sein (Pre-mold II). Die Crimpverbindung kann dann nach dem Spritzen des ersten Gehäuseteils 44' einfacher hergestellt werden, weil die elektronischen Bauteile 38-43 zusammen mit den ersten Gehäuseteil 44' handhabbar sind.

Der erste Gehäuseteil 44, 44' wird beim Spritzen des zweiten Gehäuseteils 46, 46' wieder über Positionierelemente 47, 47' in einer nicht dargestellten Umspritzform fixiert, wobei die überstehenden Abschnitte 48, 48' der Positionierelemente 47, 47' nach der Fertigstellung des Sensors 37 abgetrennt werden. Die Abdichtung zwischen den ersten und zweiten Gehäuseteil 44, 44' bzw. 46, 46' erfolgt erneut über stoffschlüssig mit dem zweiten Gehäuseteil 46, 46' verbundene Schmelzrippen 49, die einstückig mit dem ersten Gehäuseteil 44, 44' verbunden sind.

Bei diesem aktiven Sensor 37 ergibt sich aber noch ein weiterer Vorteil. Beim Umspritzen der elektrischen Bauteile 38, 39, 40 mit dem ersten Gehäuseteil 44, 44' können diese zu ihrer exakten Positionierung in der Form abgestützt werden. Die verbleibenden Abstützabdrucke bzw. Öffnungen 50, 51, 52 bilden potetielle Wege für den Eintritt von Feuchtigkeit. Damit dies verhindert wird, werden diese erfindungsgemäß gleichzeitig mit dem Spritzen des zweiten Gehäuseteils 46, 46' verschlossen.

Gemäß einer besonders bevorzugten Ausführungsform der vorliegenden Erfindung ist zumindest das Trägerblech eines insbesondere als Chip ausgebildete Sensorelement 38 mit radial vorspringenden Abschnitten 53 versehen, die vorzugsweise ohrenförmig ausgebildet sind. Durch ein derartiges Abstützmittel 53, das auch als Leadframeabstützung bekannt ist, kann das Bauteil 38 während des Spritzvorganges des zweiten Gehäuseteils 46, 46' im ersten Gehäuseteil 44, 44' und/oder der nicht dargestellten Umspritzform fixiert werden. Es wird so ein Verschwimmen des Sensorelementes 38 während der Umspritzung wirksam verhindert, was eine genaue Positionierung des elektrischen Bauteiles 38 im ersten Gehäuseteil 44 ermöglicht. Hierdurch kann insbesondere auch die Lage des Lesepunktes des Sensorelementes 38 im Sensor 37 exakt bestimmt werden.

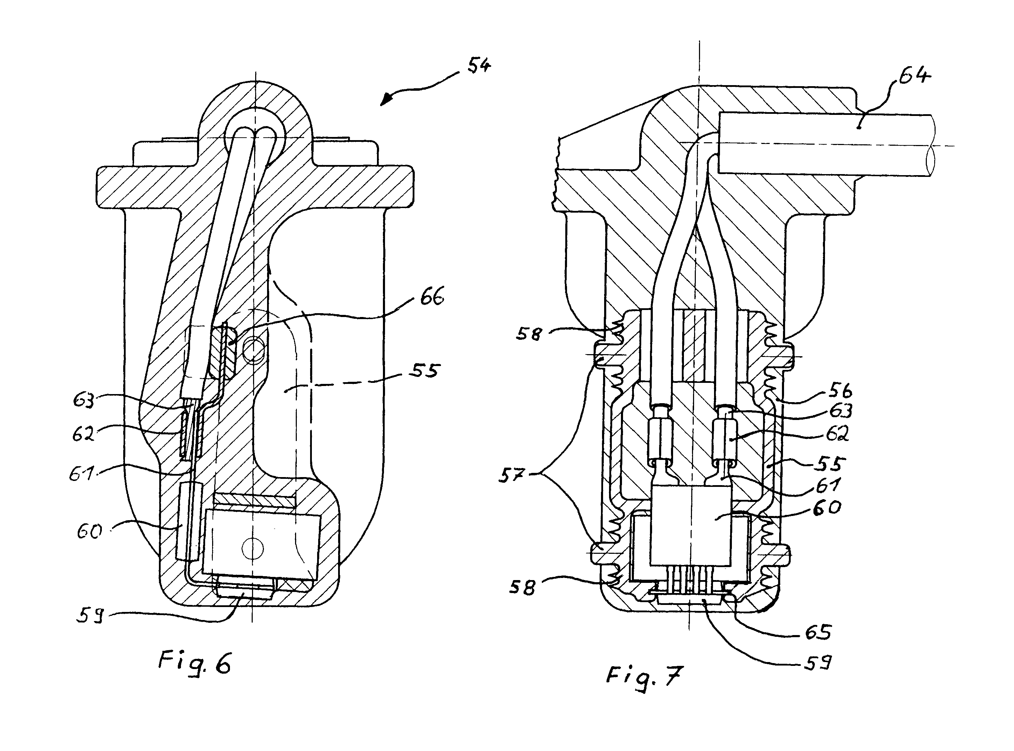

Die Figuren 6 und 7 zeigen eine weitere Ausführungsform eines erfindungsgemäßen aktiven Sensors 54. Der Sensor 54 weist erneut einen ersten und zweiten Gehäuseteil 55, 56 auf. Mit dem ersten Gehäuseteil 55 sind einstückig Positionierelemente 57 verbunden , deren Abdichtung gegenüber der Umgebung wieder vorzugsweise über Schmelzrippen 58 erfolgt. Im ersten Gehäuseteil 55 sind ferner elektrische Bauteile wie ein Sensorelement 59 und ein IC-Gehäuse 60 angeordnet. Das Gehäuse 60 weist Kontakte 61 auf, die hier über Crimphülsen 62 mit Leitern 63 elektrisch leitend verbunden sind. Wie schon gesagt kannt diese Verbindung auch stoffschlüssig oder als Kombination einer stoffschlüssigen Verbindung mit einer Crimpverbindung ausgeführt sein. Die Leiter 63 sind mit einer Isolierung versehen und werden über ein Kabel 64 aus dem Sensor 54 geleitet.

Wie bereits im Zusammenhang mit den Fig. 4, 5a und 5b erläutert, weist das Sensorelent 59 radial vorstehende Abschnitte 65 auf, die als Abstützung zur Fixierung des Sensorelementes 59 und damit Festlegung eines exakten Lesepunktes im Sensor 54 dienen. Insbesondere können die Abschnitte 65 in dazugehörige, nutenartige Öffnungen des ersten Gehäuseteils 55 eingelegt oder -steckt werden, so daß die Umspritzung der elektrischen Bauteile 59 - 63 hier entfallen und durch das Einlegen ersetzt werden kann.

Die Crimpkontakte 62 sind in dieser Ausführungsform mit einem Halteelement 66 verbunden. Dieses Halteelement 66 wird bei der Spritzung des ersten Gehäuseteils 55 in diesem verankert und kann so in vorteilhafter Weise auf die Crimpverbindung wirkende Zugkräfte aufnehmen und an den ersten Gehäuseteil 55 weiterleiten.

### Bezugszeichenliste

- 1: passiver Sensor
- 2: erstes Gehäuseteil
- 3: Permanentmagnet
- 4: Polschuhe
- 5: Spule
- 6: Kontakte
- 7: zweiter Gehäuseteil
- 8: Crimpverbindungen
- 9: elektrische Leiter
- 10: Isolation
- 11: Tülle
- 12: Rippen
- 13: Positionierelemente
- 14: Umspritzform
- 15: Außenkontur des Sensors
- 16: Positionierabschnitt
- 17: Schmelzelemente
- 18: Schmelzrippen
- 19: Schmelzrippen
- 20: aktiver Sensor
- 21: Sensorelement
- 22: Vorspannmagnet
- 23: Encoder
- 24: IC-Gehäuse
- 25: Kontakte
- 26: Crimphülsen
- 27: elektrische Leiter
- 28: Isolierung
- 29: erster Gehäuseteil bzw. Positionierelement
- 30: Positionierabschnitt
- 31: zweiter Gehäuseteil
- 32: Außenkontur
- 33: Abtrennlinie
- 34: Schmelzrippen
- 35: Positionierelemente
- 36: Schmelzrippen
- 37: aktiver Sensor
- 38: Sensorelement
- 39: Vorspannmagnet
- 40: IC-Gehäuse
- 41: Kontakte
- 42: Crimphülsen
- 43: elektrische Leiter
- 44, 44': erster Gehäuseteil
- 45: Kabel
- 46, 46': zweiter Gehäuseteil
- 47, 47': Positionierelemente
- 48, 48': Positionierabschnitte
- 49: Schmelzrippen
- 50: Abstützabdruck
- 51: Abstützabdruck
- 52: Abstützabdruck
- 53: (Leadframe-) Abstützung
- 54: aktiver Sensor
- 55: erster Gehäuseteil
- 56: zweiter Gehäuseteil
- 57: Positionierelemente
- 58: Schmelzelemente
- 59: Sensorelement
- 60: IC-Gehäuse
- 61: Kontakte
- 62: Crimphülsen
- 63: elektrische Leiter
- 64: Kabel
- 65: (Leadframe-) Abstützung
- 66: Halteelement

- D: Wanddicke
- L: nutzbarer Luftspalt

## Patentansprüche

1. Sensor zur Erfassung von Ortsverschiebungen, Bewegungsgeschwindigkeiten oder Drehzahlen eines Encoders, mit einem elektrische Bauteile (3 - 6, 8 - 10, 21 - 28, 38 - 43, 45, 59 - 63) aufnehmenden Gehäuse mit einem ersten Gehäuseteil (2, 29, 44, 44', 55) aus Kunststoff, welches von einem zweiten, in einem Spritzgießvorgang ebenfalls aus Kunststoff erzeugten Gehäuseteil (7, 31, 46, 46', 56) zumindest teilweise umhüllt ist, **dadurch gekennzeichnet, daß** der erste Gehäuseteil (2, 29, 44, 44', 55) wenigstens ein einstückig damit verbundenes Positionierelement (13, 29, 47, 47', 57) umfaßt, das mit dem zweiten Gehäuseteil (7, 31, 46, 46', 56) stoffschlüssig verbunden ist.

2. Sensor nach Anspruch 1, **dadurch gekennzeichnet, daß** das Positionierelement (13, 29, 47, 47', 57) und/oder der erste Gehäuseteil (2, 29, 44, 44', 55) zumindest ein integriertes Schmelzelement (17, 19, 34, 49, 58) umfassen.

3. Sensor nach Anspruch 2, **dadurch gekennzeichnet, daß** die Schmelzelemente als dünne Rippen (18, 19, 34, 49, 58) ausgebildet sind.

4. Sensor nach Anspruch 2 oder 3, **dadurch gekennzeichnet, daß** die Schmelzelemente (18, 19, 34, 49, 58) aus thermoplastischem Material bestehen, das einen kleineren oder höchstens gleichen Schmelzpunkt wie das Material des zweiten Gehäuseteils (7, 31, 46, 46', 56) aufweist.

5. Sensor nach einem der vorhergehenden Ansprüche, **dadurch gekennzeichnet, daß** außerhalb des ersten Gehäuseteils (29) angeordnete elektrische Bauteile (27, 28) mit wenigstens einem zusätzlichen Positionierelement (35) versehen sind, das mit dem zweiten Gehäuseteil (31) stoffschlüssig verbunden ist.

6. Sensor nach einem der vorhergehenden Ansprüche, **dadurch gekennzeichnet, daß** wenigstens ein Abschnitt eines Positionierelementes (13, 29, 35, 47, 47',57) im ersten Gehäuseteil (2, 29, 44, 44', 55) als Bohrung ausgebildet ist.

7. Sensor nach Anspruch 6, **dadurch gekennzeichnet, daß** die Bohrung zur Aufnahme eines Siftes oder stiftähnlichen Körpers geeignet ist.

8. Sensor nach einem der vorhergehenden Ansprüche, **dadurch gekennzeichnet, daß** sich die Positionierelemente (13, 35, 47, 47', 57) bezogen auf die Mittelachse des Sensors (1, 37) radial nach außen erstrecken.

9. Sensor nach Anspruch 6 oder 8, **dadurch gekennzeichnet, daß** die Schmelzelemente (18, 36, 49, 58) radial umlaufend um die Mittelachse der Positionierelemente (13, 35, 47, 57) angeordnet sind.

10. Sensor nach einem der Ansprüche 1 - 4, **dadurch gekennzeichnet, daß** die Schmelzelemente (19) bezogen auf die Mittelachse des Sensors (1) radial umlaufend an zumindest einem Ende des ersten Gehäuseteils (2) angeordnet sind.

11. Sensor nach einem der Ansprüche 1 - 4, **dadurch gekennzeichnet, daß** die Positionierelemente (13, 29, 47, 47', 57) zumindest geringfügig über die Außenkontur (15, 32) des Sensors (1, 20, 37, 54) hinausragen.

12. Sensor nach Anspruch 11, **dadurch gekennzeichnet, daß** die über die Außenkontur (15, 32) des Sensors (1, 20, 37, 54) hinausragenden Abschnitte (16, 30, 48, 48') der Positionierelemente (13, 29, 47, 47', 57) leicht entfernbar sind.

13. Sensor nach einem der Ansprüche 1 - 4, **dadurch gekennzeichnet, daß** die elektrisch leitende Verbindung der Kontakte (6, 25, 41, 61) der elektrischen Bauteile (5, 24, 40, 60) mit den elektrischen Leitern (9, 27, 43, 63) eine stoffschlüssige Verbindung, wie beispielsweise Löten oder Schweißen, ist.

14. Sensor nach einem der Ansprüche 1 - 4, **dadurch gekennzeichnet, daß** zur elektrisch leitenden Verbindung der Kontakte (6, 25, 41, 61) der elektrischen Bauteile (5, 24, 40, 60) mit den elektrischen Leitern (9, 27, 43, 63) Crimpverbindungen (8, 26, 42, 62) vorgesehen sind.

15. Sensor nach einem der Ansprüche 13 oder 14, **dadurch gekennzeichnet, daß** die elektrisch leitende Verbindung eine Kombination einer stoffschlüssigen Verbindung und einer kraftschlüssigen Verbindung ist, wobei als kraftschlüssige Verbindung vorzugsweise Crimpverbindungen (8, 26, 42, 62) vorgesehen sind.

16. Sensor nach Anspruch 14 oder 15, **dadurch gekennzeichnet, daß** die Crimpverbindungen (42) im ersten Gehäuseteil (44) angeordnet sind.

17. Sensor nach Anspruch 14 oder 15, **dadurch gekennzeichnet, daß** die Crimpverbindungen (42, 62) im zweiten Gehäuseteil (44', 56) angeordnet sind.

18. Sensor nach einem der vorhergehenden Ansprüche, **dadurch gekennzeichnet, daß** die elektrischen Bauteile (38, 59) zumindest teilweise radial nach außen vorspringende Abschnitte (53, 65) aufweisen.

19. Sensor nach Anspruch 18, **dadurch gekennzeichnet, daß** zumindest der erste Gehäuseteil (55) Öffnungen, insbesondere Nuten, zur Aufnahme der nach außen vorspringende Abschnitte (65) der elektrischen Bauteile (59) aufweist.

20. Verfahren zur Herstellung eines Sensors zur Erfassung von Ortsverschiebungen, Bewegungsgeschwindigkeiten oder Drehzahlen eines Encoders, mit einem elektrische Bauteile (3 - 6, 8 - 10, 21 - 28, 38 - 43, 45, 59 - 63) aufnehmenden Gehäuse, das einen ersten (2, 29, 44, 44', 55) und zweiten (7, 31, 46, 46', 56) Gehäuseteil aus Kunststoff aufweist, mit den Verfahrensschritten
a) Umspritzen und/oder Einlegen zumindest eines Teils der elektrischen Bauteile (3 - 6, 21, 22, 38 - 43, 59 - 63) mit/in einem/einen ersten Gehäuseteil (2, 29, 44, 44', 55),
b) Fixierung des ersten Gehäuseteils (2, 29, 44, 44', 55) in einer Umspritzform (14) mittels zumindest eines einstückig mit dem ersten Gehäuseteil (2, 29, 44, 44', 55) verbundenen Positionierelementes (13, 29, 47, 47', 57),
c) Umspritzen des ersten Gehäuseteils (2, 29, 44, 44', 55) mit dem zweiten Gehäuseteil (7, 31, 46, 46', 56) und
d) Herstellung einer stoffschlüssigen Verbindung zwischen den Positionierelementen (13, 29, 35, 47, 47', 57) und dem zweiten Gehäuseteil (7, 31, 46, 46', 56).

21. Verfahren nach Anspruch 20, **dadurch gekennzeichnet, daß** außerhalb des ersten Gehäuseteils (29) angeordnete elektrische Bauteile (27, 28) vor dem Spritzen des zweiten Gehäuseteils (31) mittels zumindest eines weiteren Positionierelementes (35) in der Umspritzform fixiert werden.

22. Verfahren nach Anspruch 20, **dadurch gekennzeichnet, daß** die Fixierung des ersten Gehäuseteils(2, 29, 44, 44', 55) in der Umspritzform (14) über zumindest einen Stift erfolgt, der in einer Bohrung eines Positionierelementes (13, 29, 35, 47, 47', 57) fixiert wird.

23. Verfahren nach Anspruch 20, **dadurch gekennzeichnet, daß** nach dem Spritzen des zweiten Gehäuseteils (7, 31, 46, 46', 56) die über die Außenkontur (15, 32) des Sensors (1, 20, 37, 54) hinausragenden Abschnitte (16, 30, 48, 48') der Positionierelemente (13, 29, 47, 47', 57) abgetrennt werden.

24. Verfahren nach Anspruch 20, **dadurch gekennzeichnet, daß** die Kontakte (6, 25, 41, 61) der elektrischen Bauteile (5, 24, 40, 60) und die elektrischen Leiter (9, 27, 43, 63) mittels einer stoffschlüssigen Verbindung, wie beispielsweise Löten oder Schweißen, elektrisch leitend verbunden werden.

25. Verfahren nach Anspruch 20, **dadurch gekennzeichnet, daß** die Kontakte (6, 25, 41, 61) der elektrischen Bauteile (5, 24, 40, 60) und die elektrischen Leiter (9, 27, 43, 63) mittels Crimpverbindungen (8, 26, 42, 62), vorzugsweise in einem einzigen Schritt, elektrisch leitend verbunden werden.

26. Verfahren nach einem der Ansprüche 24 oder 25, **dadurch gekennzeichnet, daß** die elektrisch leitende Verbindung durch eine Kombination einer stoffschlüssigen Verbindung mit einer kraftschlüssigen Verbindung erfolgt, wobei die kraftschlüssige Verbindung vorzugsweise mittels Crimpverbindungen (8, 26, 42, 62) erfolgt.

27. Verfahren nach einem der Ansprüche 24 bis 26, **dadurch gekennzeichnet, daß** die Herstellung der elektrisch leitenden Verbindung vor dem Umspritzen der elektrischen Bauteile (38 - 43) mit dem ersten Gehäuseteil (44) erfolgt.

28. Verfahren nach einem der Ansprüche 24 bis 26, **dadurch gekennzeichnet, daß** die Herstellung der elektrisch leitenden Verbindung nach dem Umspritzen der elektrischen Bauteile (38 - 40) mit dem ersten Gehäuseteil (44') erfolgt.

29. Verfahren nach Anspruch 20, **dadurch gekennzeichnet, daß** die elektrischen Bauteile (38, 59) vor dem Spritzen des zweiten Gehäuseteils (46, 56) zumindest teilweise über radial vorspringende Abschnitte (53, 65) im ersten Gehäuseteil (44, 55) und/oder der Umspritzform fixiert werden.

30. Verfahren nach Anspruch 20, **dadurch gekennzeichnet, daß** die elektrischen Bauteile (59) vor dem Spritzen des zweiten Gehäuseteils (56) zumindest teilweise über radial vorspringende Abschnitte (65) in Öffnungen, insbesondere Nuten, des ersten Gehäuseteils (55) fixiert werden.

## Claims

1. Sensor for sensing position shifts, motional velocities, or rotational speeds of an encoder, which includes a housing accommodating electric components (3-6, 8-10, 21-28, 38-43, 45, 59-63) and a first housing part (2, 29, 44, 44', 55) made of plastics, which is enwrapped at least in part by a second housing part (7, 31, 46, 46', 56) which is also made of plastics in an injection-molding operation,
**characterized in that** the first housing part (2, 29, 44, 44', 55) includes at least one positioning element (13, 29, 47, 47', 57) which is connected integrally with it and molecularly interfaced with the second housing part (7, 31, 46, 46', 56).

2. Sensor as claimed in claim 1,
**characterized in that** the positioning element (13, 29, 47, 47', 57) and/or the first housing part (2, 29, 44, 44', 55) include at least one integrated melting element (17, 19, 34, 49, 58).

3. Sensor as claimed in claim 2,
**characterized in that** the melting elements are configured as thin ribs (18, 19, 34, 49, 58).

4. Sensor as claimed in claim 2 or claim 3,
**characterized in that** the melting elements (18, 19, 34, 49, 58) are made of thermoplastic material which has a melting point lower than, or at most equal to, that of the material of the second housing part (7, 31, 46, 46', 56).

5. Sensor as claimed in any one of the preceding claims,
**characterized in that** electric components (27, 28) arranged outside the first housing part (29) are provided with at least one additional positioning element (35) which is molecularly interfaced with the second housing part (31).

6. Sensor as claimed in any one of the preceding claims,
**characterized in that** at least one portion of a positioning element (13, 29, 35, 47, 47', 57) is configured as a bore in the first housing part (2, 29, 44, 44', 55).

7. Sensor as claimed in claim 6,
**characterized in that** the bore is appropriate for accommodating a pin or pin-shaped element.

8. Sensor as claimed in any one of the preceding claims,
**characterized in that** the positioning elements (13, 35, 47, 47', 57) extend radially outwardly in relation to the center line of the sensor (1, 37).

9. Sensor as claimed in claim 6 or claim 8,
**characterized in that** the melting elements (18, 36, 49, 58) are arranged radially circumferentially about the center line of the positioning elements (13, 35, 47, 57).

10. Sensor as claimed in any one of claims 1 to 4,
**characterized in that** the melting elements (19) are arranged radially circumferentially with respect to the center line of the sensor (1) on at least one end of the first housing part (2).

11. Sensor as claimed in any one of claims 1 to 4,
**characterized in that** the positioning elements (13, 29, 47, 47', 57) project at least slightly from the outside contour (15, 32) of the sensor (1, 20, 37, 54).

12. Sensor as claimed in claim 11,
**characterized in that** the portions (16, 30, 48, 48') of the positioning elements (13, 29, 47, 47', 57) which project from the outside contour (15, 32) of the sensor (1, 20, 37, 54) are easily removable.

13. Sensor as claimed in any one of the claims 1 to 4,
**characterized in that** the electrically conductive connection between the contacts (6, 25, 41, 61) of the electric components (5, 24, 40, 60) and the electric conductors (9, 27, 43, 63) is by way of a molecular bond, such as soldering or welding.

14. Sensor as claimed in any one of the claims 1 to 4,
**characterized in that** the electrically conductive connection between the contacts (6, 25, 41, 61) of the electric components (5, 24, 40, 60) and the electric conductors (9, 27, 43, 63) is effected by crimped connections (8, 26, 42, 62).

15. Sensor as claimed in any one of claims 13 or 14,
**characterized in that** the electrically conductive connection is a combination of a molecular bond and an operative connection, and crimped connections (8, 26, 42, 62) are preferred as operative connections.

16. Sensor as claimed in claim 14 or claim 15,
**characterized in that** the crimped connections (42) are arranged in the first housing part (44).

17. Sensor as claimed in claim 14 or claim 15,
**characterized in that** the crimped connections (42, 62) are arranged in the second housing part (44', 56).

18. Sensor as claimed in any one of the preceding claims,
**characterized in that** the electric components (38, 59) have at least in part radially outwardly projecting portions (53, 65).

19. Sensor as claimed in claim 18,
**characterized in that** at least the first housing part (55) includes openings, more particularly grooves, to accommodate the outwardly projecting portions (65) of the electric components (59).

20. Method of manufacturing a sensor for sensing position shifts, motional velocities, or rotational speeds of an encoder, which includes a housing accommodating electric components (3-6, 8-10, 21-28, 38-43, 45, 59-63) and comprising a first housing part (2, 29, 44, 44', 55) and a second housing part (7, 31, 46, 46', 56) made of plastics, comprising the method steps:
a) injection-molding and/or inserting at least one part of the electric components (3-6, 21, 22, 38-43, 59-63) with, respectively, in a first housing part (2, 29, 44, 44', 55),
b) fixing the first housing part (2, 29, 44, 44', 55) in a mold (14) by means of at least one positioning element (13, 29, 47, 47', 57) which is integrally connected to the first housing part (2, 29, 44, 44', 55),
c) injection-molding the second housing part (7, 31, 46, 46', 56) around the first housing part (2, 29, 44, 44', 55), and
d) providing a molecular bond between the positioning elements (13, 29, 35, 47, 47', 57) and the second housing part (7, 31, 46, 46', 56).

21. Method as claimed in claim 20,
**characterized in that** electric components (27, 28) which are arranged outside the first housing part (29) are fixed in position in the mold by at least one additional positioning element (35) before the second housing part (31) is injection-molded.

22. Method as claimed in claim 20,
**characterized in that** the first housing part (2, 29, 44, 44', 55) is fixed in position in the mold (14) by at least one pin which is fixed in a bore of a positioning element (13, 29, 35, 47, 47', 57).

23. Method as claimed in claim 20,
**characterized in that** the portions (16, 30, 48, 48') of the positioning elements (13, 29, 47, 47', 57) which project from the outside contour (15, 32) of the sensor (1, 20, 37, 54) are severed after the second housing part (7, 31, 46, 46', 56) has been injection-molded.

24. Method as claimed in claim 20,
**characterized in that** the contacts (6, 25, 41, 61) of the electric components (5, 24, 40, 60) and the electric conductors (9, 27, 43, 63) are connected so as to be electrically conductive by way of a molecular bond, such as soldering or welding.

25. Method as claimed in claim 20,
**characterized in that** the contacts (6, 25, 41, 61) of the electric components (5, 24, 40, 60) and the electric conductors (9, 27, 43, 63) are interconnected so as to be electrically conductive by way of crimped connections (8, 26, 42, 62), preferably in one single step.

26. Method as claimed in any one of claims 24 or 25,
**characterized in that** the electrically conductive connection is provided by a combination of a molecular bond and an operative connection, and the operative connection is preferably constituted by crimped connections (8, 26, 42, 62).

27. Method as claimed in any one of claims 24 to 26,
**characterized in that** the electrically conductive connection is established before the first housing part (44) is injection-molded around the electric components (38-43).

28. Method as claimed in any one of claims 24 to 26,
**characterized in that** the electrically conductive connection is established after the first housing part (44') is injection-molded around the electric components (38-40).

29. Method as claimed in claim 20,
**characterized in that** the electric components (38, 59) are at least in part fixed in position in the first housing part (44, 55) and/or the mold by way of radially projecting portions (53, 65) before the second housing part (46, 56) is injection-molded.

30. Method as claimed in claim 20,
**characterized in that** the electric components (59) are at least in part fixed in position in openings, especially grooves, of the first housing part (55) by way of radially projecting portions (65) before the second housing part (56) is injection-molded.

## Revendications

1. Capteur permettant de détecter des décalages de localisation, des vitesses de déplacement ou des vitesses de rotation d'un codeur, comprenant un boîtier qui sert à loger des composants électriques (3 - 6, 8 - 10, 21 - 28, 38 - 43, 45, 59 - 63) et comporte une première partie de boîtier (2, 29, 44, 44', 55) en matière plastique qui est entourée au moins partiellement par une seconde partie de boîtier (7, 31, 46, 46', 56) réalisée également en matière plastique dans une opération de moulage par injection, **caractérisé en ce que** la première partie de boîtier (2, 29, 44, 44', 55) comporte au moins un élément de positionnement (13, 29, 47, 47', 57) qui est relié par coopération entre matières à la seconde partie de boîtier (7, 31, 46, 46', 56).

2. Capteur suivant la revendication 1, **caractérisé en ce que** l'élément de positionnement (13, 29, 47, 47', 57) et/ou la première partie de boîtier (2, 29, 44, 44', 55) comportent au moins un élément fusible (17, 19, 34, 49, 58) par intégrée.

3. Capteur suivant la revendication 2, **caractérisé en ce que** les éléments fusibles sont réalisés sous forme de nervures (18, 19, 34, 49, 58) minces.

4. Capteur suivant la revendication 2 ou 3, **caractérisé en ce que** les éléments fusibles (18, 19, 34, 49, 58) sont constitués d'une matière thermoplastique qui possède un point de fusion plus bas que celui de la matière de la seconde partie de boîtier (7, 31, 46, 46', 56) ou au maximum égal à celui-ci.

5. Capteur suivant l'une des revendications précédentes, **caractérisé en ce que** des composants électriques (27, 28) disposés à l'extérieur de la première partie de boîtier (29) sont pourvus d'au moins un élément de positionnement (35) supplémentaire qui est relié par coopération entre matières à la seconde partie de boîtier (31).

6. Capteur suivant l'une des revendications précédentes, **caractérisé en ce qu'**au moins une partie d'un élément de positionnement (13, 29, 35, 47, 47', 57) est réalisé dans la première partie de boîtier (2, 29, 44, 44', 55) sous forme de perçage.

7. Capteur suivant la revendication 6, **caractérisé en ce que** le perçage sert à loger une cheville ou corps analogue à une cheville.

8. Capteur suivant l'une des revendications précédentes, **caractérisé en ce que** les éléments de positionnement (13, 35, 47, 47', 57) s'étendent radialement vers l'extérieur vis-à-vis de l'axe central du capteur (1, 37).

9. Capteur suivant la revendication 6 ou 8, **caractérisé en ce que** les éléments fusibles (18, 36, 49, 58) sont disposés circonférentiellement tout autour de l'axe central des éléments de positionnement (13, 35, 47, 57).

10. Capteur suivant l'une des revendications 1 à 4, **caractérisé en ce que** les éléments fusibles (19) sont disposés circonférentiellement tout autour, vis-à-vis de l'axe central du capteur (1), à au moins une extrémité de la première partie de boîtier (2).

11. Capteur suivant l'une des revendications 1 à 4, **caractérisé en ce que** les éléments de positionnement (13, 29, 47, 47', 57) font saillie au moins dans une faible mesure au-delà du contour extérieur (15, 32) du capteur (1, 20, 37, 54).

12. Capteur suivant la revendication 11, **caractérisé en ce que** les parties (16, 30, 48, 48') des éléments de positionnement (13, 29, 47, 47', 57) qui font saillie au-delà du contour extérieur (15, 32) du capteur (1, 20) peuvent être retirées facilement.

13. Capteur suivant l'une des revendications 1 à 4, **caractérisé en ce que** la liaison électriquement conductrice des contacts (6, 25, 41, 61) des composants électriques (5, 24, 40, 60) avec les conducteurs électriques (9, 27, 43, 63) est une liaison par coopération entre matières, telle que par exemple brasage ou de soudage.

14. Capteur suivant l'une des revendications 1 à 4, **caractérisé en ce que** des liaisons par sertissage (8, 26, 42, 62) sont prévues pour la liaison électriquement conductrice des contacts (6, 25, 41, 61) des composants électriques (5, 24, 40, 60) avec les conducteurs électriques (9, 27, 43, 63).

15. Capteur suivant l'une des revendications 13 ou 14, **caractérisé en ce que** la liaison électriquement conductrice est une combinaison d'une liaison par coopération entre matières et d'une liaison par application de force, des liaisons par sertissage (8, 26, 42, 62) étant de préférence prévues en tant que de liaison par application de force.

16. Capteur suivant l'une des revendications 14 ou 15, **caractérisé en ce que** les liaisons par sertissage (42) sont disposées dans la première partie de boîtier (44).

17. Capteur suivant l'une des revendications 14 ou 15, **caractérisé en ce que** les liaisons par sertissage (42, 62) sont disposées dans la seconde partie de boîtier (44', 56).

18. Capteur suivant l'une des revendications précédentes, **caractérisé en ce que** les composants électriques (38, 59) comportent des parties (53, 65) en saillie au moins partiellement radialement vers l'extérieur.

19. Capteur suivant la revendication 18, **caractérisé en ce qu'**au moins la première partie de boîtier (55) comporte des ouvertures, notamment des rainures, servant à recevoir les parties en saillie vers l'extérieur (65) des composants électriques (59).

20. Procédé de fabrication d'un capteur permettant de détecter des décalages de localisation, des vitesses de déplacement ou des vitesses de rotation d'un codeur, comportant un boîtier qui sert à loger des composants électriques (3 - 6, 8 - 10, 21 - 28, 38 - 43, 45, 59 - 63) et qui comprend une première (2, 29, 44, 44', 55) et une seconde (7, 31, 46, 46', 56) parties de boîtier en matière plastique, comportant les opérations de procédé :
a) enveloppement par injection et/ou mise en place d'au moins une partie des composants électriques (3 - 6, 21, 22, 38 - 43, 59 - 63) avec/dans une première partie de boîtier (2, 29, 44, 44', 55),
b) immobilisations de la première partie de boîtier (2, 29, 44, 44', 55) dans un moule d'enveloppement par injection (14) au moyen d'au moins un élément de positionnement (13, 29, 47, 47', 57) relié d'une seule pièce à la première partie de boîtier (2, 29, 44, 44', 55),
c) enveloppement par injection de la première partie de boîtier (2, 29, 44, 44', 55) par la seconde partie de boîtier (7, 31, 46, 46', 56) et
d) réalisation d'une liaison par coopération entre matières entre les éléments de positionnement (13, 29, 47, 47', 57) et la seconde partie de boîtier (7, 31, 46, 46', 56).

21. Procédé suivant la revendication 20, **caractérisé en ce que** des composants électriques (27, 28) disposés à l'extérieur de la première partie de boîtier (29) sont immobilisés dans le moule d'enveloppement par injection, avant l'injection de la seconde partie de boîtier (31), au moyen d'au moins un autre élément de positionnement (35).

22. Procédé suivant la revendication 20, **caractérisé en ce que** l'immobilisation de là première partie de boîtier (2, 29, 44, 44', 55) dans le moule d'enveloppement par injection (14) s'effectue au moyen d'au moins une cheville qui est fixée dans un perçage d'un élément de positionnement (13, 29, 35, 47, 47', 57).

23. Procédé suivant la revendication 20, **caractérisé en ce qu'**après l'injection de la seconde partie de boîtier (7, 31, 46, 46', 56), les parties (16, 30, 48, 48') des éléments de positionnement (13, 29, 47, 47', 57) qui font saillie au-delà du contour (15, 32) du capteur (1, 20, 37, 54) sont séparées.

24. Procédé suivant la revendication 20, **caractérisé en ce que** les contacts (6, 25, 41, 61) des composants électriques (5, 24, 40, 60) et les conducteurs électriques (9, 27, 43, 63) sont reliés d'une manière électriquement conductrice au moyen d'une liaison par coopération entre matières, telle que par exemple brasage ou soudage.

25. Procédé suivant la revendication 20, **caractérisé en ce que** les contacts (6, 25, 41, 61) des composants électriques (5, 24, 40, 60) et les conducteurs électriques (9, 27, 43, 63) sont reliés d'une manière électriquement conductrice au moyen de liaisons par sertissage (8, 26, 42, 62), de préférence en une opération unique.

26. Procédé suivant l'une des revendications 24 ou 25, **caractérisé en ce que** la liaison électriquement conductrice s'effectue au moyen d'une combinaison d'une liaison par coopération entre matières avec une liaison par application de force, la liaison par application de force ayant de préférence lieu au moyen de liaisons par sertissage (8, 26, 42, 62).

27. Procédé suivant l'une des revendications 24 à 26, **caractérisé en ce que** la réalisation de la liaison électriquement conductrice a lieu avant l'enveloppement par injection des composants électriques (38 - 43) avec la première partie de boîtier (44).

28. Procédé suivant l'une des revendications 24 à 26, **caractérisé en ce que** la réalisation de la liaison électriquement conductrice a lieu après l'enveloppement par injection des composants électriques (38 - 40) avec la première partie de boîtier (44').

29. Procédé suivant la revendication 20, **caractérisé en ce que** les composants électriques (38, 59) sont immobilisés dans la première partie de boîtier (44, 55) et/ou le moule d'enveloppement par injection, avant l'injection de la seconde partie de boîtier (46, 56), au moins partiellement par l'intermédiaire de parties en saillie radiale (53, 65).

30. Procédé suivant la revendication 20, **caractérisé en ce que** les composants électriques (59) sont immobilisés dans des ouvertures, notamment des rainures, de la première partie de boîtier (55), avant l'injection de la seconde partie de boîtier (56), au moins partiellement par l'intermédiaire de parties en saillie radiale (65).
